# EUROPEAN PATENT SPECIFICATION

(11) **EP 4 519 636 B1**
(45) Date of publication and mention of the grant of the patent: **26.08.2026**
(21) Application number: 23726617.6
(22) Date of filing: 03.05.2023
(51) Int. Cl.: G01F 1/66, G01F 1/667

(54) **AN IMPROVED DEVICE FOR MEASURING A FLUID, PREFERABLY A GAS**
VERBESSERTE VORRICHTUNG ZUR MESSUNG EINES FLUIDS, VORZUGSWEISE EINES GASES
DISPOSITIF AMÉLIORÉ POUR MESURER UN FLUIDE, DE PRÉFÉRENCE UN GAZ

(30) Priority: 03.05.2022 IT 202200008975
(43) Date of publication of application: 12.03.2025
(73) Proprietor: Pietro Fiorentini S.p.A., 36057 Arcugnano (VI) (IT)
(72) Inventor: VIANELLO, Mario, 20088 Rosate (MI) (IT); MEMÈ, Lorenzo, 20088 Rosate (MI) (IT); D'ANGELO, Matteo, 20088 Rosate (MI) (IT); GUZZETTI, Sergio, 20088 Rosate (MI) (IT); IMBOCCIOLI, Claudio, 36051 Creazzo (Vicenza) (IT)
(74) Representative: Braidotti, Andrea
(86) International application number: PCT/IB2023/054590
(87) International publication number: WO 2023/214323

(56) References cited:
- EP-A1- 2 202 493
- EP-A2- 2 410 299
- US-A- 4 004 461
- US-A1- 2015 000 422
- US-A1- 2021 270 650
- US-B2- 8 904 881

## Description

### TECHNICAL FIELD

The present invention relates to a duct for the passage of a fluid to be measured, said duct being suitable for being used for/in an ultrasound device for measuring a fluid, preferably a gas.

The present invention also relates to an ultrasound device for measuring a fluid, preferably a gas, which is provided with said duct.

In particular, the device is of the type suitable for measuring one or more quantities relating to a fluid which passes through the passage duct with which the device is provided, and more specifically, it is suitable for measuring at least the flow rate and/or flow of fluid which passes through this duct. Preferably, said fluid is a gas or a mixture of gases and, for example, it can be natural gas or another gas produced in a decentralized way, such as biomethane and/or hydrogen.

Preferably, said device is suitable for use inside a gas meter and, in particular, a gas meter (also called "gas meter").

Therefore, the invention finds advantageous use in the technical sector of the production and marketing of apparatus and devices for measuring fluids and can be advantageously used both at the domestic level and at the industrial level. Conveniently, the device according to the invention can be used for counting gas consumption in a domestic or industrial plant, or for counting gas consumption in general, for example when leaving a container.

### STATE OF THE ART

Various ultrasonic devices are currently known which can be installed inside a gas meter (also called "gas meter") in order to measure the gas flow through the device itself.

Ultrasound devices of the known type, such as for example the one described and illustrated in JP2014215060, comprise a duct, with a substantially tubular development and a substantially rectangular cross section, for the passage of the gas to be measured. Furthermore, the duct of these devices has, in correspondence with the upper wall, an elongated insertion port (i.e. an open/missing portion) for the assembly and positioning inside the duct itself of a plurality of dividing plates which are made in a piece separate from the duct and which are configured and arranged in such a way as to make uniform the distribution of the flow velocity of the fluid passing through the duct. Once the dividing plates have been inserted, the elongated insertion port is first covered with a entrainment flux suppression foil and then closed with a mounting block in which corresponding mounting seats are machined for a pair of ultrasonic sensors.

In particular, the two ultrasonic sensors, which are configured to emit and receive ultrasonic signals, are mounted at the top wall and are positioned one upstream and one downstream along the direction in which the fluid passes through the duct. In more detail, the ultrasonic signal emitted by one sensor is reflected from the internal surface of the wall, which is opposite to both sensors, towards the other sensor (and/or vice versa), thus allowing the ultrasonic signal to intercept the fluid flow which flows inside the duct thus defining a "V" reflection path.

In order to reduce the number of components which are made separately by molding, and therefore in order to reduce the corresponding costs, in particular of assembly, a solution has therefore already been proposed, such as the one illustrated in WO2020/031621, WO2020/031622 or WO2020/044887, in which the duct for the passage of the fluid to be measured is molded in one piece with the dividing plates and furthermore, in correspondence with the upper wall of the duct, no elongated insertion ports are obtained, but are obtained two separate openings, each facing one of the two ultrasonic sensors, to thus allow the ultrasonic signals from the sensors to enter and exit said duct.

The known solutions do not allow the reflection of the ultrasonic signals emitted by a sensor and received by the other sensor to be varied and optimized in a simple way, in particular in order to adapt to the composition of the fluid to be measured.

EP2410299, US8904881, EP2202493 and US4004461 disclose ducts for the measurement of a fluid made of two pieces.

US2021/0270650 and US2015/0000422 disclose ducts for the measurement of a fluid made of a single piece and comprising a reflection surface integrated with the internal surface of the duct itself.

### OBJECTS OF THE INVENTION

The object of the invention is to propose a fluid passage duct to be used for/in an ultrasound device for measuring said fluid, preferably a gas, which allows to overcome, at least in part, the drawbacks present in the known solutions.

Another object of the invention is to propose an ultrasound device for measuring a fluid, preferably a gas, which allows the drawbacks present in the solutions of the prior art mentioned above to be overcome, at least in part.

Another object of the invention is to propose a duct and a device which allow to vary and optimize the reflection, particularly in terms of reflection path, of the ultrasonic signals towards the receiving ultrasonic sensor.

Another object of the invention is to propose a duct and a device which are fluid-tight, preferably gas-tight.

Another object of the invention is to propose a duct which can be easily and rapidly modified in terms of size and/or geometry.

Another object of the invention is to propose a duct which can be easily and rapidly adapted to measure different fluids and/or quantities.

Another object of the invention is to propose a duct and a device which can be produced and assembled in series in a rapid and efficient manner.

Another object of the invention is to propose a duct and a device which are structurally and functionally completely reliable.

Another object of the invention is to propose a duct and a device which are improvements and/or alternatives to the traditional ones.

Another object of the invention is to propose a duct and a device which can be manufactured simply, rapidly and at low cost.

Another object of the invention is to propose a duct and a device which present an alternative characterization, both in constructive and functional terms, with respect to the traditional ones.

### SUMMARY OF THE INVENTION

All the objects mentioned here, considered both individually and in any combination thereof, and others which will result from the following description are achieved, according to the invention, with a duct as defined in claim 1 and with a device as defined in claim 22.

### DESCRIPTION OF THE FIGURES

The present invention is hereinafter further clarified in some of its preferred embodiments shown for purely exemplifying and non-limiting purposes with reference to the attached table of drawings, in which:
- Figure 1: shows a perspective view of the duct according to the invention in a first embodiment,
- Figure 2: is a side view of the duct of figure 1,
- Figure 3: is a partially sectioned perspective view of the first piece of the duct of fig. 1,
- Figure 4: shows a section of the duct of fig. 1 according to a plane extending along the X and Y directions and passing through the center of the duct itself, in a variant in which the mounting means for the electronic card are provided only on the first piece,
- Figure 5: shows in the same view of fig. 4 a second embodiment of the duct according to the invention,
- Figure 6: shows a partially sectioned side view of the first piece of the duct of fig. 5,
- Figure 7: shows in the same view of fig. 4 a third embodiment of the duct according to the invention,
- Figure 8: is an exploded perspective view of the duct of fig. 7,

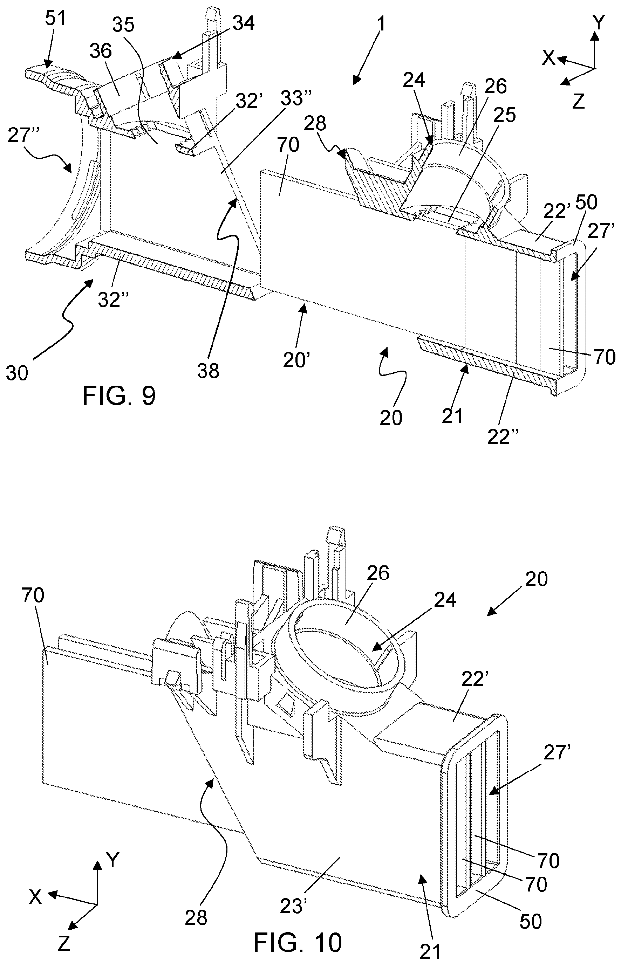

- Figure 9: shows an exploded perspective view of the duct of fig. 7 partially dissected,
- Figure 10: is a perspective view of the first piece of the duct of fig. 7,

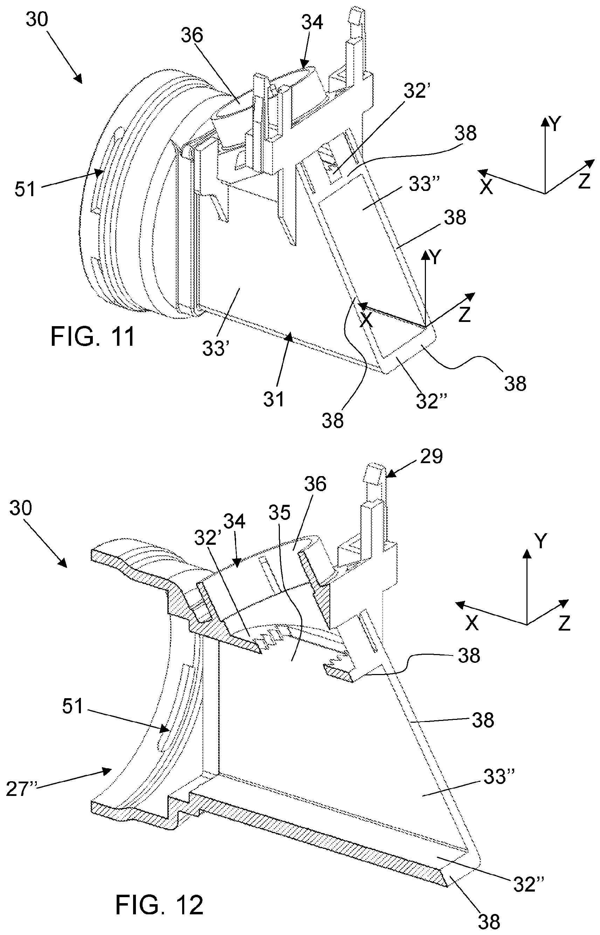

- Figure 11: is a perspective view of the second piece of the duct according to the invention which can be used in the duct of both fig. 1 that of fig. 7,
- Figure 12: is a partially sectioned perspective view of the second piece of fig. 11, and

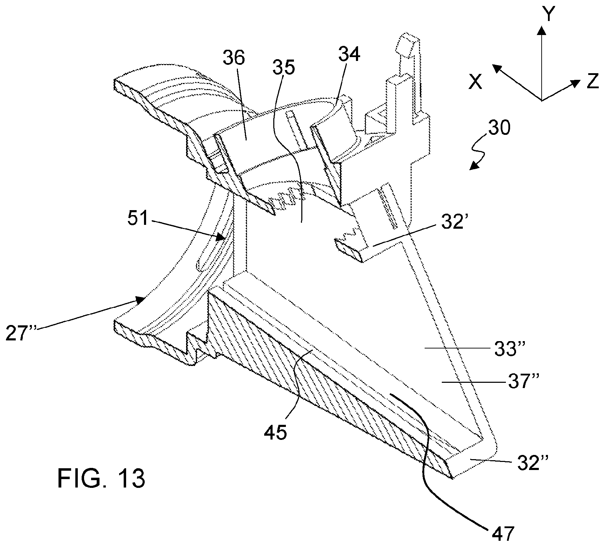

- Figure 13: shows a partially sectioned perspective view of a variant of the second piece of fig. 11.

### DETAILED DESCRIPTION OF THE INVENTION AND SOME OF ITS PREFERRED EMBODIMENTS

As can be seen from the figures, the present invention relates to a duct 1 for the passage of a fluid to be detected/measured, preferably a gas but could also be a liquid, for example water. In particular, the duct 1 is suitable to be used for/in an ultrasonic device for measuring the fluid. In particular, the device is of the type suitable for detecting the presence of a fluid and/or for measuring one or more quantities relating to the fluid flowing through the passage duct 1 with which the device is provided, and more specifically, it is suitable for measuring at least the flow rate and/or flow of fluid passing through said duct. Preferably, said fluid to be detected/measured is a gas or a mixture of gases and, for example, it can be a natural gas or gas of other types produced in a decentralized way, such as biomethane or hydrogen.

Preferably, the device is suitable for use inside a gas meter and, in particular, a gas meter (also called "gas meter").

The duct 1 comprises two pieces, respectively a first piece 20 and a second piece 30, which are then fixed together to define, following their union and only in combination, a measuring channel 40 which is intended to be crossed by the fluid to measure. Preferably, the measuring channel 40 can be closed fluid-tight at least in correspondence with the areas of union/contact between the two pieces 20 and 30. Preferably, the measuring channel 40 can be entirely closed fluid-tight along its development longitudinal.

Conveniently, the measuring channel 40 - which is defined by the joining and fixing of the second piece 30 to the first piece 20 - has a longitudinal development along the X direction, which also corresponds to the main advancement direction of the fluid flow crossing the channel. Furthermore, the cross section of the measuring channel 40 is preferably of a substantially rectangular shape and develops along a Y direction and along a Z direction, perpendicular both to each other and to the X direction so as to thus complete the Cartesian triad, in which - preferably - the extension along the Y direction is greater than the extension along the Z direction. Advantageously, the substantially rectangular shape of the cross section of the measuring channel 40 allows to obtain a constant and more uniform speed of the fluid (compared for example to a circular section).

Suitably, the duct 1 comprises a first port 27' for the inlet or outlet of the fluid to be measured in/from said duct 1 and a second outlet 27" for the outlet or inlet of the fluid from/into said duct 1. Suitably, the first port 27' is defined in the first piece 20, while the second port 27" is defined in the second piece 30. The fluid to detect/measure can pass through the duct 1 - and in particular the measuring channel 40 - with a direction of the flow F which mainly goes from the first port 27' towards the second port 27". Conveniently, the first port 27' and the second port 27" are aligned and facing each other. Conveniently, it is understood that the fluid flow could cross the duct 1 in the opposite direction, i.e. be directed from the second port 27" towards the first port 27'.

Conveniently, the two pieces 20 and 30 - which, once they are fixed together, define the duct 1 and internally delimit the measuring channel 40 - are made by moulding. Conveniently, the two pieces 20 and 30 can be molded separately or together. Conveniently, the two pieces 20 and 30 can be molded by using a single suitable mold or with two distinct moulds. Conveniently, the two pieces 20 and 30 can be extracted from the single mold already separated or they can be extracted still connected to each other (for example with a section of sprue), to be separated later.

Conveniently, the two pieces 20 and 30 are made entirely or mostly of polymeric material, preferably of thermoplastic material. The two pieces 20 and 30 can be made by molding with at least one polymeric resin, for example PolyButylene Terephthalate (PBT), Glycoluryl-Formaldehyde (GF), PolyPropylene (PP), PolyOxyMethylene (POM), PolyCarbonate, Acrylonitrile ButadieneStyrene (ABS), or even recycled plastic polymer materials.

Preferably, the two pieces 20 and 30 are made of the same thermoplastic material. Conveniently, in a possible embodiment, the second piece 30 can be made of a different thermoplastic material than the first piece 20.

Conveniently, to define the measuring channel 40, the two pieces 20 and 30 are fixed and kept together, at the respective abutting edges 28 and 38, by means of one or more technologies for joining plastic materials, such as in particular: gluing and/or welding (for example by laser, ultrasound, hot blade, rotational friction) and/or hot plastic riveting and/or by mechanical joining (for example with a shape/joint engagement and/or hooking and/or snap-fit and/or press-fit).

The first piece 20 comprises a first tubular portion 21 which extends along the longitudinal direction X and which, preferably, has a substantially rectangular cross-section, optionally with rounded corners.

The first tubular portion 21 comprises:
- a first upper wall 22',
- a first bottom wall 22" which faces the first top wall 22',
- two first side walls, respectively 23' and 23", arranged between the first upper wall 22' and the first bottom wall 22" so as to define a substantially rectangular cross-section.

Conveniently, the first two lateral walls 23' and 23" face each other along the Z direction, while the first upper wall 22' and the first bottom wall 22" face each other along the Y direction. Conveniently, the two side walls 23' and 23" extend between the first upper wall 22' and the first bottom wall 22" substantially along the direction Y which is perpendicular to the longitudinal direction X. Suitably, the first upper wall 22' and the first bottom wall 22" each extend between the first side walls 23' and 23" substantially along the Z direction.

Suitably, the first piece 20 also comprises the first port 27' of the duct 1 which, as mentioned, can define the inlet or outlet port of the fluid in/from the duct 1. Advantageously, the first port 27' can be defined at a end of the first tubular portion 21.

Conveniently, the first tubular portion 21 of the first piece 20 also comprises a first abutting edge 28 which is intended to come into contact, to then be joined and fixed, with a second abutting edge 38 of a second tubular portion 32 provided in the second piece 30, to thus define the measuring channel 40.

Conveniently, the first abutting edge 28 is formed on the first tubular portion 21 at an end longitudinally opposite to that at which the first port 27' is defined.

Conveniently, the first abutting edge 28 is defined on all the walls 22', 22", 23' and 23" of the first tubular portion 21. Conveniently, the first abutting edge 28 of the first upper wall 22' can be located in a more advanced position, along the X direction, with respect to the first abutting edge of the first back wall 22". Conveniently, the abutting edge of the first side walls 23', 23" can be inclined or shaped.

According to the appended claims, the first piece 20 also comprises at least one dividing plate 70 for the flow of fluid which is intended to cross said measuring channel 40, said at least one dividing plate 70 coming out of the first tubular portion 21 at the abutting edge 28.

Preferably, said at least one dividing plate 70 is made in one piece with the first piece 20 and in particular with the first tubular portion 21. Conveniently, said at least one dividing plate 70 extends, at least partially, inside the first tubular portion 21 Conveniently, the dividing plates 70 are configured so as to divide the inside of the measuring channel 40 obtained by joining and fixing the first piece 20 with the second piece 30 into two or more layers. The dividing plate 70 inside the measuring channel 40 improves the measurement performance due to the greater perimeter of the layers into which said channel is divided by said at least one dividing plate.

Preferably, the dividing plates 70 protrude from the first tubular portion 21, and in particular protrude beyond the first abutting edge 28 of the first tubular portion 21.

According to the appended claims, therefore, the first piece 20 comprises at least one dividing plate 70 of the flow F which is configured to be entirely inserted and housed inside the second piece 30, once the abutting edge 28 of the first piece 20 has come into contact with the abutting edge 38 of the second piece 30, thus defining the measuring channel 40.

Conveniently, the dividing plates 70 protrude from the first tubular portion 21 to then be fully inserted and housed inside a second tubular portion formed in the second piece 30, once the first abutting edge 28 of the first piece 20 comes into contact with the second abutting edge 38 of the second piece 30. Advantageously, this allows to facilitate and speed up the assembly of the two pieces since the dividing plates 70 protruding from the first piece 20 define a component of the "male" type which thus fits inside a component of the "female" type defined by the second piece 30.

Conveniently, the dividing plates 70 have a development along the X direction such that, when the first abutting edge 28 of the first piece 20 comes into contact with the second abutting edge 38 of the second piece 30, the aforementioned plates substantially affect the majority or the entire longitudinal development (i.e. along the X direction) of the measurement channel 40.

Conveniently, as mentioned, said at least one dividing plate 70 is molded in a single body with the first tubular portion 21 of the first piece 20.

Each dividing plate 70 has a substantially laminar development in which the extension along the Z direction (thickness) is much smaller than the extension along the other two directions X and Y. Conveniently, each dividing plate 70 is arranged, at least partially inside interior of the first tubular portion 21 so as to lie on a plane that extends along the two directions X and Y. Preferably each dividing plate can protrude from said first tubular portion 21 to be thus inserted and housed inside the second tubular portion 31 of the second piece 30. Conveniently, if several dividing plates 70 are provided, these are arranged so as to be spaced apart from each other and substantially parallel to each other along the direction Z.

Preferably, each dividing plate 70 can have a variable thickness along the X direction and, in particular, can have a maximum thickness in correspondence with a central portion thereof along the X direction, and also having a gradually decreasing thickness towards the first port 27' of the first piece 20 and towards the second port 27" of the second piece 30.

Preferably, the leading and/or trailing edges of each dividing plate 70 can be curved, i.e. chamfered and rounded.

Conveniently, in a possible embodiment not shown here, it is the second piece 30 which comprises said at least one dividing plate 70 which protrudes from the second tubular portion 31 in correspondence with the abutting edge 38 and which is configured to be fully inserted and housed in the inside of the first piece 20, once the abutting edge 28 of the first piece 20 has come into contact with the abutting edge 38 of the second piece 30, thus defining the measuring channel 40.

Conveniently, in a possible embodiment not shown here, in addition to said at least one dividing plate 70 of the first piece 20, the second piece 30 also comprises at least one further dividing plate for the flow of fluid which is intended to pass through said measuring channel 40, said at least one further dividing plate protruding from the second tubular portion 31 in correspondence with the abutting edge 38 and is configured to be entirely inserted and housed inside the first piece 20, once the abutting edge 28 of the first piece 20 has come into contact with the abutting edge 38 of the second piece 30, thus defining the measuring channel 40. Preferably, the first port 27' comprises a flanged edge 50. Preferably, at the first port 27', the flanged edge 50 can join up with the first tubular portion 21 with a curved profile with outward concavity, thus defining a funnel-shaped portion (not shown). Preferably, the dividing plates 70 extend along the X direction until they arrive substantially flush with the first port 27'.

Suitably, the first piece 20 comprises a first opening 25 for the passage of ultrasonic signals 17 emitted and/or received by at least one first ultrasonic sensor 19' which is mounted (or which is intended to be mounted) on said first piece 20. Preferably, the first opening 25 is obtained on the first upper wall 22' of the tubular portion 21 of the first piece 20 and is configured so that the ultrasonic signals (waves) 17, emitted by at least one corresponding first ultrasonic sensor 19', enter and/or come out of the measuring channel 40 - which is obtained by joining and fixing the second piece 30 to the first piece 20 - crossing said opening 25.

Conveniently, at the first opening 25, the duct 1 comprises a first mounting portion 24 for the first ultrasonic sensor 19'. Conveniently, the first mounting portion 24 comprises a corresponding first seat 26 which is configured to receive a corresponding ultrasonic sensor 19'. The first seat 26 communicates with the first opening 25 so that the ultrasonic signals 17 can enter the measuring channel 40 and/or leave it.

Conveniently, the first mounting portion 24 - and in particular the respective first seat 26 - is configured so that the ultrasonic signals 17 emitted by the first sensor 19' enter and exit the measuring channel 40 at an angle with respect to the direction X, and in particular with respect to the main advancement direction of the fluid flow F inside the channel.

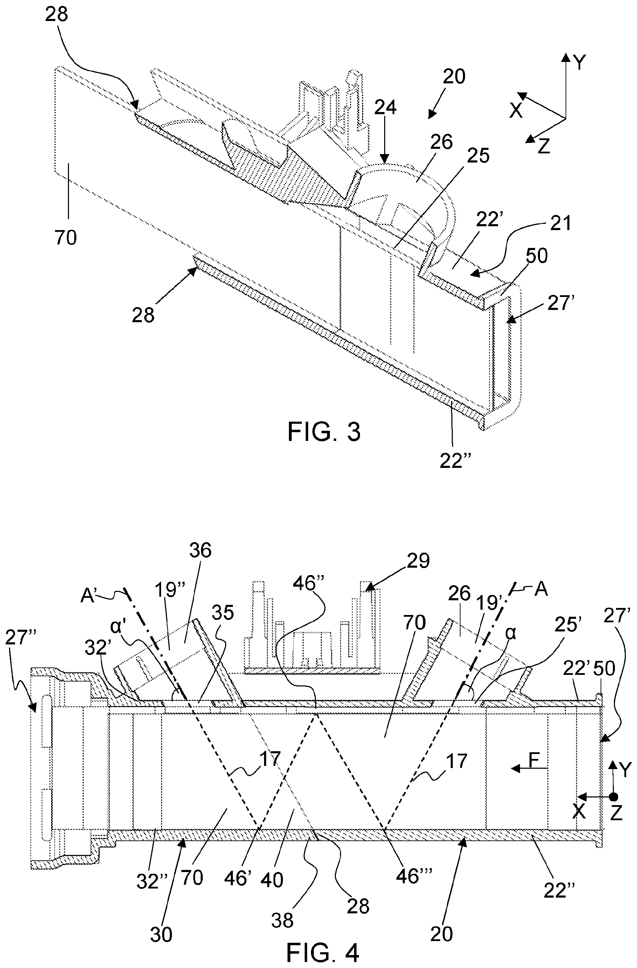

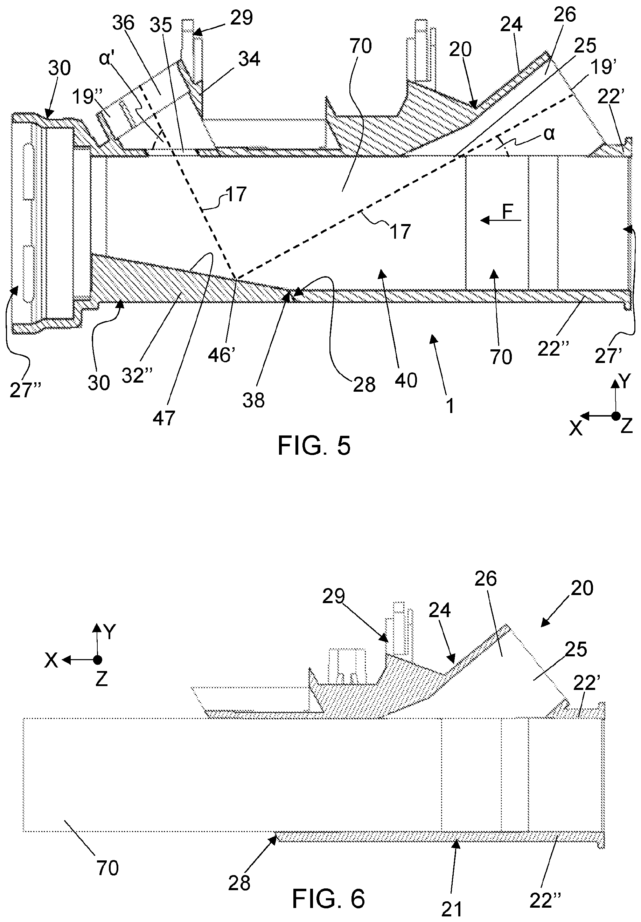

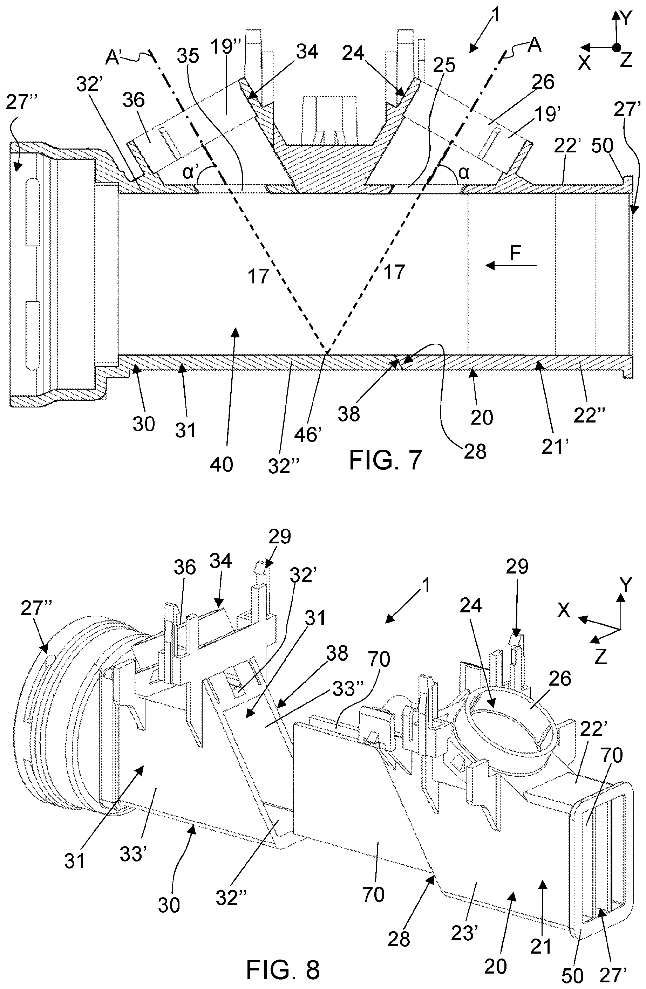

Conveniently, the longitudinal development axis A of the first mounting portion 24 is angled with respect to the X direction by a corresponding angle α lower than or equal to 90° so that the ultrasonic signal 17 emitted by the first sensor 19' can define a path of "V" reflection, which can be symmetrical (see fig. 7) or asymmetrical (see fig. 5) or "W' (see fig.4), to then be received by the second mounted 19" sensor on the second piece 30 (or vice versa), as described in more detail below.

Conveniently, in the case of a "W' reflection path (see fig. 4), a first reflection zone 46' is provided on the second back wall 32" of the second piece 30, a second reflection zone 46" which is defined on the first upper wall 22' of the first piece alongside the first opening 25 of the first sensor 19', and a third reflection zone 46‴ which is defined on the first bottom wall 22' of the first piece 20.

Conveniently, in the case of a "V"-shaped reflection path (see fig. 5), a first and only reflection zone 46' is provided which is defined on the second bottom wall 32" of the second piece 30.

Conveniently, in the embodiment shown, the first mounting portion 24 is made (molded) in a single piece with the first piece 20, however - in a possible embodiment not shown here - said portion could be made/molded in one or more separate pieces with respect to the first piece 20 and then be fixed to the latter by gluing or welding or by mechanical fixing.

The second piece 30 comprises a second tubular portion 31 which extends along the longitudinal direction X and which, preferably, has a substantially rectangular cross-section, optionally with rounded corners.

The second tubular portion 31 comprises:
- a second upper wall 32',
- a second bottom wall 32" which faces the second top wall 32',
- two second lateral walls, respectively 33' and 33", arranged between the second upper wall 32' and the second bottom wall 32" so as to define a substantially rectangular cross-section.

Conveniently, the two second side walls 33' and 33" face each other along the Z direction, while the second upper wall 32' and the second bottom wall 32" face each other along the Y direction. Conveniently, the two second side walls 33' and 33" extend between the second upper wall 32' and the second bottom wall 32" substantially along the direction Y which is perpendicular to the longitudinal direction X. Suitably, the second upper wall 32' and the second bottom wall 32" each extend between the second side walls 33' and 33" substantially along the Z direction.

Suitably, the second piece 30 also comprises the second port 27" of the duct 1 which, as mentioned, can define the inlet or outlet port of the fluid in/from the duct 1. Advantageously, the second port 27' can be defined at one end of the second tubular portion 31.

Conveniently, as mentioned, the second tubular portion 31 of the second piece 30 also comprises a second abutting edge 38 which is intended to come into contact, to then be joined and fixed, with the first abutting edge 28 of the first tubular portion 21 of the first piece 20, to thus define the measuring channel 40.

Conveniently, the second abutting edge 38 of the second piece 30 is configured so that its cross section (i.e. on the YZ plane) substantially corresponds in terms of shape and dimensions to the cross sectional profile of the first abutting edge 28 of the first piece 20 so that, once the two edges are in contact to be thus joined and fixed, they define a measuring channel 40 which is closed in a fluid-tight manner at least at the aforementioned joining/contact edges between the two pieces, thus avoiding that the fluid which passes through the two pieces comes out in correspondence with the areas where the two pieces 20 and 30 are in contact with each other.

Conveniently, the second abutting edge 38 is formed on the second tubular portion 31 at an end which is longitudinally opposite to that at which the second port 27' is defined.

Suitably, the second abutting edge 38 is defined on/along all the walls 32', 32", 33' and 33" of the second tubular portion 31. Suitably, the second abutting edge of the second bottom wall 32" it can be in a more advanced position, along the X direction, with respect to the second abutting edge of the second upper wall 32'. Conveniently, the abutting edge of the second side walls 33', 33" can be inclined.

Conveniently, the thickness of the second abutting edge 38 can have a variously shaped conformation which is complementary to the conformation of the first abutting edge 28.

Conveniently, the first abutting edge 28 of the first piece 20 can have a thickness which is inclined in a first direction, while the second abutting edge 38 of the second tubular portion 32 of the second piece 30 can have a thickness which is inclined in an opposite direction to the first, so that in correspondence with the areas of contact and union between the aforementioned two edges 28 and 38 the internal surfaces of the respective tubular portions are substantially flush, thus defining a substantially continuous internal surface which avoids the formation of turbulence in the flow of fluid.

Suitably, therefore, the second piece 30, and in particular its second tubular portion 31, define a receiving section/cavity for the dividing plates 70 which protrude from the first tubular portion 21 of the first piece 20.

Conveniently, the second piece 30 comprises a second opening 35 for the passage of ultrasonic signals 17 emitted and/or received by at least one second ultrasonic sensor 19" which is mounted (or which is intended to be mounted) on said second piece 30. Conveniently, the second opening is obtained in correspondence with the second upper wall 32'.

Conveniently, once the dividing plates 70 of the first piece 20 are inserted inside the second piece 30 and the first abutting edges 28 of the first piece 20 are in contact with the second abutting edges 38 of the second piece 30, the two sensors 19' and 19" - mounted respectively on the first piece 20 and on the second piece 30 - are placed side by side, one upstream and one downstream, along the direction X in which the fluid F crosses the duct.

Preferably, the second opening 35 is obtained on the second upper wall 32' of the second tubular portion 31 of the second piece 30 and is configured so that the ultrasonic signals (waves) 17, emitted by at least one corresponding second ultrasonic sensor 19", enter and/or come out of the measuring channel 40 - which is obtained by joining and fixing the second piece 30 to the first piece 20 - crossing said opening 35.

Conveniently, at the second opening 35, the second piece 30 comprises a corresponding second mounting portion 34 for the second ultrasonic sensor 19". Conveniently, the second mounting portion 34 comprises a corresponding second seat 36 which is configured to receive a corresponding ultrasonic sensor 19". The second seat 36 communicates with the second opening 35 so that the ultrasonic signals 17 can enter the measuring channel 40 and/or leave it.

Conveniently, the longitudinal development axis A' of the second mounting portion 34 is angled with respect to the direction X by a corresponding angle α' which is less than or equal to 90°.

Conveniently, the second mounting portion 34 - and in particular the second seat 36 for housing the second sensor 19" - is configured so that the ultrasonic signals 17 emitted by the second sensor 19" enter and leave the measuring channel 40 at an angle with respect to the direction X, and in particular with respect to the direction of main advancement of the flow F of fluid inside the channel.

Conveniently, the first 20 and/or the second piece 30 can/can also comprise means 51 for connecting the piece itself (and therefore of the duct 1 resulting from the union of the union of the two pieces) with other components of the meter inside of which the duct 1 - and the corresponding device provided with the duct - is intended to be installed. Preferably, these connection means 51 are provided in correspondence with the second port 27" provided in the second piece 30 and comprise, for example, a connection/hooking area provided with elements (for example slots) for the mechanical engagement of corresponding counters - elements of a component (not shown) housed inside the measuring device in which a device provided with duct 1 is also installed.

Conveniently, the second piece 30 can comprise an inclined internal surface 47 in which a reflection zone 46' is defined for the ultrasonic signals 17 emitted by the sensors 19' and/or 19", to thus vary and optimize the reflection angle of the said ultrasonic signals towards the corresponding receiving sensor 19' and/or 19". Preferably, this inclined inner surface 47 is defined on the second bottom wall 32" of the second piece 30.

Preferably, the angle of inclination and the extension of the inclined internal surface 47, in which the reflection zone 46' is also obtained, are suitably defined on the basis of the angle that the longitudinal development axis A of the housing seat, respectively 26 for the first sensor 19' and 36 for the second sensor 19", defined with the X direction.

Preferably, once the second piece 30 is joined and fixed to the first piece 20, the walls of the first tubular portion 21 of the first piece 20 are substantially coplanar or in any case parallel to the respective walls of the second tubular portion 31 of the second piece 30.

Conveniently, in a possible embodiment, the longitudinal development axis A of the first mounting portion 24 for housing the first sensor 19' defines an angle α with the direction X which can be substantially equal to the angle α' which the longitudinal development axis A' of the second mounting portion 34 for housing the second sensor 19" always defines with respect to the direction X .

Conveniently, in another possible embodiment, the longitudinal development axis A of the first mounting portion 24 for housing the first sensor 19' defines an angle α with the X direction which can be different from the angle α' which the longitudinal development axis A' of the second mounting portion 34 for housing the second sensor 19" always defines with respect to the X direction.

Preferably, the inclination angle α, with respect to the X direction, of the longitudinal development axis A of the first mounting portion 24 for housing the first sensor 19' and the inclination angle α' , with respect to the X direction, of the longitudinal development axis A' of the second mounting portion 34 for housing the second sensor 19" are suitably determined on the basis of the length of the measuring channel 40 and/or on the basis of the reflection geometry (for example a " V" or "W") of the ultrasonic signal within the channel itself.

Conveniently, the same first piece 20 can be associated with different second pieces 30, for example having different inclinations and/or surface treatment of the inner surface 47 of the second bottom wall 32", thus defining measuring channels 40 of different lengths, as well as reflection paths of different geometries. Conveniently, the same second piece 30 can be associated with different first pieces 20, for example having different lengths of the first tubular portion 21 and/or of the dividing plates 70 and/or having different inclination of the mounting portion 24 for the first sensor 19', thus defining measuring channels 40 of different lengths, as well as reflection paths of different geometries.

This is particularly advantageous if, for example depending on the type of gas to be measured, one wishes to modify the reflection path of the ultrasonic signals 17, thus passing from a reflection geometry with a single bounce (which defines a "V") to one with three bounces (which defines a "W' shape), or even more than three bounces, or vice versa, and/or even if you want to lengthen the path of the ultrasonic signals 17 which cross the fluid flow F without intervening on the inclination angle α and/or α', respectively of the first mounting portion 24 for the first sensor 19' and of the second mounting portion 34 for the second sensor 19".

Advantageously, the first piece 20 and the second piece 30 can comprise mechanical engagement means (not shown), preferably mechanical engagement means for hooking (for example clip), for press-fit, for interlocking and/or snap (also called of "snap-fit"), which are configured to hold the two pieces together. Preferably, the mechanical engagement means comprise first means provided on the walls of the first tubular portion 21 of the first piece 20 and which are configured to engage by hooking, interlocking and/or snap with second means provided on the walls of the second tubular portion 31 of the second piece 30.

Preferably, in a possible embodiment (not shown), the first means comprise at least one tongue which is elastically yielding and which has a hole into which a corresponding pin which defines the second means engages by interlocking. Suitably, each tab has a suitable elastic yield so that the contact of its end, preferably blunt, with the pin causes its bending until the pin itself faces the hole, thus allowing the elastic return of the tab and the insertion at fit the pin into the hole. Advantageously, moreover, the pin can be further fixed in the hole of the tab by welding, preferably ultrasonic.

Conveniently, the mechanical engagement means are configured to be activated when the joint movement between the second piece 30 and the first piece 20 reaches corresponding end-of-stroke positions, in particular when the first abutting edge 28 of the first piece 20 comes into contact with the second abutting edge 38 of the second piece 30. Conveniently, the mechanical engagement means allow the two pieces 20 and 30 to be fixed and kept stably joined together over time.

Conveniently, the internal surface 47 - preferably inclined - of the second upper wall 32' and/or of the second bottom wall 32" of the second piece 30 can comprise at least one groove 45, which extends longitudinally along the X direction, configured to accommodate inside it by means of shape coupling a section of a corresponding dividing plate 70 which emerges from the first tubular portion 21 of the first piece 20.

Conveniently, each groove 45 and each portion of the dividing plate 70 which fits into said groove 45 are configured so as to define an engagement and interlocking of such a shape as to substantially prevent the entry of fluid inside the groove.

Conveniently, the second piece 30 and/or the first piece 20, or in any case the piece in which at least one reflection zone 46', 46" and/or 46‴ is defined for the ultrasonic signals 17 emitted by the sensors 19' and/or 19", may/may be made exclusively of a thermoplastic material or may/may be made predominantly of a thermoplastic polymeric material and also comprise inserts (as described in greater detail below) in a different polymeric, thermoplastic or not, for example metallic. Preferably, the second piece 30 and/or the first piece 20, or in any case the piece in which the reflection zones for the ultrasonic signals 17 emitted by the sensors 19' and/or 19" are defined, may comprise zones with a different surface finish, for example treated so as to make it substantially "mirror-like", to thus facilitate the reflection of said ultrasonic signals 17.

Advantageously, the reflection zones 46', 46" and/or 46"', in correspondence with which the ultrasonic signals 17 are intended to be reflected, can be made of a different material or with a different surface finish with respect to the remaining part of the second piece 30 and/or with respect to the first piece 20. For example, the reflection zones can be made or treated so as to define a glossy surface. Conveniently, the reflection zones can be made of different materials with respect to the remaining part of the piece made of polymeric material, for example they can be made of metal and preferably co-moulded with the piece itself. Conveniently, the reflection zones can comprise with a different conformation with respect to the remaining part of the second piece 30 and/or with respect to the first piece 20. Preferably, the reflection zones can comprise a hollow profile and/or a protruding profile. Preferably, the hollow profile and/or the protruding profile comprise suitably rounded portions and is free from sharp edges. Preferably, the reflection zones can comprise diffraction gratings, for example defined by a plurality of equal pyramids, equidistant and aligned with each other along the X and Z directions.

Conveniently, in a possible embodiment, in correspondence with the second abutting edges 38 of the second piece 30 which come into mutual contact with the first abutting edges 28 of the first piece 20 when these are joined together, gaskets can be provided, preferably rubber or other soft material. Conveniently, in this case, the rubber gaskets are co-moulded with the body of the first 20 and/or of the second 30 piece which is made of plastic.

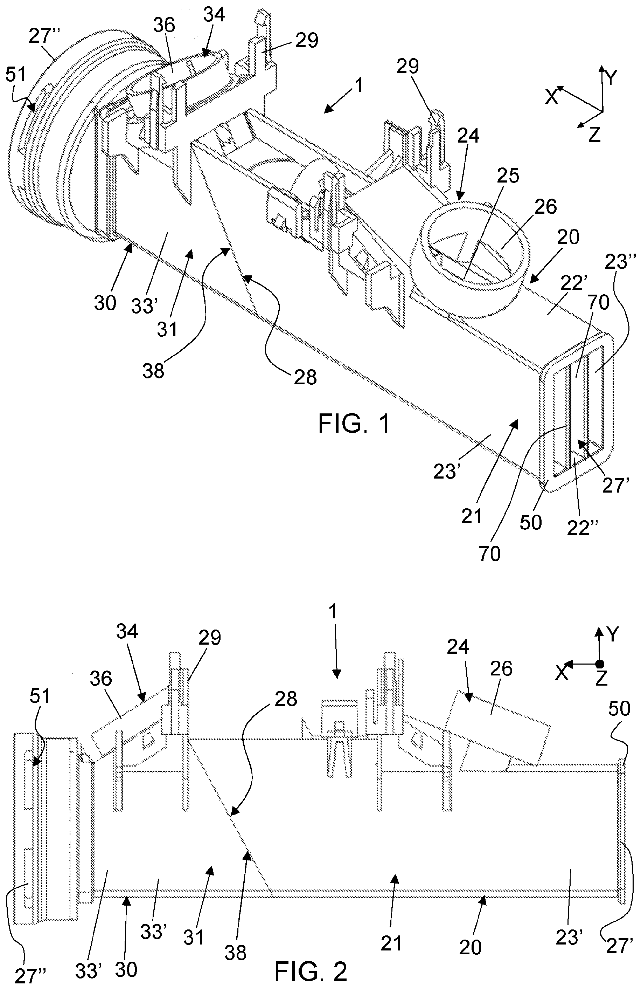

Conveniently, at the first upper wall 22' of the first piece 20 and at the second upper wall 32' of the second piece 30 (see embodiment of fig. 1) or only at the first upper wall 22' of the first piece 20 (see embodiment of fig. 4), the duct 1 can also comprise mounting means 29 of an electronic board provided with a command and control unit (for example microprocessor or microcontroller) for the ultrasonic sensors 19 ', 19" and/or a processing unit (for example microprocessor or microcontroller) of what is detected by the ultrasonic sensors 19', 19".

The present invention also relates to an ultrasound device for measuring a fluid, preferably for measuring the flow rate of a gas, which is provided with a duct 1 as described above.

The device also comprises a pair of ultrasonic sensors 19', 19" which are respectively arranged one upstream and the other downstream along the longitudinal development direction X of the measuring channel 40 which is defined once the two pieces 20 and 30 of the duct 1 are joined and fixed together. Conveniently, the ultrasonic sensors 19', 19" are operatively associated with the duct 1 so as to emit ultrasonic signals 17 within the measuring channel 40 and receive the ultrasonic signals 17 emitted and reflected within said channel.

Conveniently, each ultrasonic sensor is of the traditional type in itself and is configured to emit and receive ultrasonic signals 17.

Conveniently, in the device according to the invention, the first sensor 19' is mounted in the first mounting portion 24 of the first piece 20, while the second sensor 19" is mounted in the second mounting portion 34 of the second piece 30.

Conveniently, the two ultrasonic sensors 19', 19" are mounted on the respective pieces 20 and 30 so that the ultrasonic signals 17 are emitted and received diagonally with respect to the longitudinal development direction X of the measuring channel 40 and diagonally with respect to the direction of main advancement of the fluid inside said channel.

The device also comprises a unit for measuring the flow rate and/or flow of the fluid which passes through the channel 40 of the duct 1 of the device itself. In particular, the measurement unit is configured to calculate the flow rate on the basis of the propagation time of the ultrasonic signals 17 between the two sensors 19', 19", in particular from the upstream sensor 19' to the downstream one 19", and/or vice versa. In particular, the propagation time is the period of time which elapses between the instant in which a sensor 19', 19" emits an ultrasonic signal 17 so as to make it propagate through the fluid to be measured up to the instant in which said ultrasonic signal 17 is received by the other sensor 19', 19". Conveniently, the configuration of the flow rate or flow measurement unit is obtained, in a manner per se known to those skilled in the art and therefore not described in detail below, on the basis of the propagation time.

Conveniently, said flow rate measurement unit comprises a microprocessor or microcontroller mounted on an electronic card which is electronically connected to the pair of ultrasonic sensors 19', 19".

Conveniently, in a further embodiment (see Figs. 5 and 7), the ultrasonic signals 17 emitted by a sensor 19' or 19" are reflected - in correspondence with a reflection zone 46' defined on the inner surface of the second piece 30 and/or of the first piece 20 - towards the other sensor 19" or 19', to thus define a substantially "V"-shaped reflection path of the ultrasonic signals 17, or - in a further embodiment (see Fig. 3) - are also reflected in further reflection zones 46" and 46‴ obtained or defined respectively in correspondence with the first upper wall 22' and the first bottom wall 22" of the first piece 20, thus defining a substantially "W' reflection path of the ultrasonic signals 17.

Conveniently, it is understood that the duct 1 can have any shape, not necessarily tubular as shown in the figures, thus generically meaning any structure, of any shape and size, which is crossed by a fluid entering at a first port and exits at a second port, or vice versa. Conveniently, for example, the duct 1 can comprise, upstream and/or downstream of the measuring channel, a portion shaped like a tank or a chamber, variously shaped, as well as a further tubular section. Conveniently, the duct 1 can consist only of the two pieces 20 and 30 (as shown in the figures), but could also comprise further pieces (not shown here). Conveniently, the first piece 20 can consist only of the tubular portion 21 (as illustrated in the figures), but could also comprise further variously shaped portions (not shown here). Conveniently, the second piece 30 can consist only of the tubular portion 31 (as illustrated in the figures), but could also comprise further variously shaped portions (not shown here).

From what has been said it is clear that the duct and the device according to the invention are particularly advantageous because:
- has a high modularity, in particular allowing to easily vary and optimize the reflection characteristics of the ultrasonic signals that are emitted inside the duct,
- it is possible to combine and join the same second piece with several first pieces, or even vice versa, which are different from each other in terms of length of the tubular portion, inclination and/or position of the housing seat for the sensors, thus allowing to define channels of measurement of different lengths and different and optimized reflection paths according to the composition of the medium to be measured (for example in natural gases or hydrogen),
- the second piece - which is made/molded separately from the first piece - can be made, at least in correspondence with the reflection surface, of a suitable and dedicated shape, material and/or surface finish, and this in order to improve the focusing of the signals ultrasonic waves (for example creating a lens effect) towards the receiving sensor, thus compensating the sensor tolerance, and/or in order to attenuate or eliminate non-collimated ultrasonic signals (i.e. those out of phase or incident in an area too upstream or too far downstream), thus improving the signal-to-noise ratio,
- it can be made and assembled in a simple, rapid and low-cost way,
- it is structurally and functionally entirely reliable, and
- it is an improvement and/or alternative to traditional solutions.

In particular, advantageously, the fact that the measuring channel 40 is obtained by joining two pieces 20, 30 - each of which is provided with a corresponding tubular portion 21, 31 - allows to obtain more or less long measuring channels, depending on the fluid whose characteristics and in particular the flow rate are to be measured, and this can be done easily and simply by selecting a different and suitable second piece 30 to be associated with the same first piece 20, or vice versa.

The present invention has been illustrated and described in a preferred embodiment thereof, but it is understood that executive variants can be applied to it in practice, without however departing from the scope of protection of the present patent for industrial invention.

## Claims

1. Duct (1), for the passage of a fluid to be detected and/or measured, preferably a gas, said duct (1) being suitable for being used for/in an ultrasound device for measuring the fluid, comprising:
- a first piece (20) and a second piece (30), which are entirely or mostly made of polymeric material by molding, and which, once molded, are configured to be joined and fixed together to define, following their union, a measuring channel (40), which is intended to be crossed by the fluid to be measured,
said first piece (20) comprising:
- a first port (27') for the inlet or outlet of the fluid to be measured in/from said duct (1),
- a first opening (25), obtained in said first piece (20), for the passage of ultrasonic signals (17) emitted and/or received by at least one first ultrasonic sensor (19') intended to be mounted on said first piece (20),
- a first tubular portion (21) which is provided with a first abutting edge (28),
said second piece (30) comprising:
- a second port (27") for the outlet or entry of the fluid from/into said duct (1),
- a second opening (35), obtained in said second piece (30), for the passage of ultrasonic signals (17) emitted and/or received by at least one second ultrasonic sensor (19") intended to be mounted on said second piece (30),
- a second tubular portion (31) which is provided with a second abutting edge (38),
said first piece (20) and said second piece (30) being configured in such a way that said first abutting edge (28) of the first tubular portion (21) of the first piece (20) comes into contact with the second abutting edge (38) of the second tubular portion (31) of the second piece (30), to thus define said measuring channel (40), said duct (1) being **characterized in that**:
- it comprises at least one dividing plate (70) protruding from said first tubular portion (21) for the flow of fluid which is intended to cross said measuring channel (40),
- said first piece (20) and said second piece (30) are configured in such a way that, when the first abutting edge (28) of the first tubular portion (21) of the first piece (20) comes into contact with the second abutting edge (38) of the second tubular portion (31) of the second piece (30) to thus define said measuring channel (40), said at least one dividing plate (70) protruding from the first tubular portion (21) of the first piece (20) is entirely inserted and housed inside said second tubular portion (31) of the second piece (30).

2. Duct according to claim 1, wherein said at least one dividing plate (70) is formed in a single body/piece with said first tubular portion (21).

3. Duct according to one or more of the preceding claims, wherein said first tubular portion (21) of the first piece (20) has a substantially rectangular cross section and in that said second tubular portion (31) of the second piece (30) has a substantially rectangular cross section.

4. Duct according to one or more of the preceding claims, wherein:
- said first piece (20) comprises, in correspondence with the first opening (25), a first mounting portion (24) for a first sensor (19'), said first mounting portion (24) being angled with respect to the longitudinal development direction X of the first tubular portion (21) of the first piece (20),
- said second piece (30) comprises, in correspondence with the second opening (35), a second mounting portion (34) for a second sensor (19"), said second mounting portion (34) being angled with respect to the development direction longitudinal X of the second tubular portion (31) of the second piece (30).

5. Duct according to the preceding claim, wherein the longitudinal development axis A of the first mounting portion (24) is angled with respect to the longitudinal development direction X of the first tubular portion (21) so that the ultrasonic signal (17) emitted by the first sensor (19') defines a reflection path in a "V", symmetrical or asymmetrical, or in a "W', to then be received by the second sensor (19") mounted on the second piece (30), or vice versa.

6. Duct according to claims 4 or 5, wherein:
- the longitudinal development axis A of the first mounting portion (24) is angled with respect to the longitudinal development direction X of the first tubular portion (21) by an angle α,
- the longitudinal development axis A' of the second mounting portion (34) is angled with respect to the longitudinal development direction X of the second tubular portion (31) by an angle α',
and in which the angles α and α' are substantially equal or different to each other.

7. Duct according to one or more of the preceding claims, wherein said second tubular portion (31) comprises:
- a second upper wall (32') on which said second opening (35) is formed,
- a second bottom wall (32") which faces said second upper wall (32'),
and wherein at least one reflection zone (46') is formed in said second bottom wall (32").

8. Duct according to the preceding claim, wherein said second bottom wall (32") is inclined with respect to the longitudinal development direction X of the second tubular portion (31) of the second piece (30) and/or it is made, at least in part, of a different material and/or with a different surface finish than the remaining part of the second piece (30).

9. Duct according to one or more of the preceding claims, wherein said first tubular portion (21) comprises:
- a first upper wall (22') on which said first opening (25) is formed,
- a first bottom wall (22") which faces said first upper wall (22'),
and in that at least one reflection zone (46", 46"') is formed in said first upper wall (22') and/or in said first bottom wall (22").

10. Duct according to one or more of the preceding claims, wherein said first piece (20) and the second piece (30) comprise mechanical engagement means, preferably mechanical engagement means for hooking, for press-fit, for interlocking, snap-fit and/or snap-fit, configured to keep said first piece (20) and said second piece (30) joined together, and/or said first piece (20) and/or said second piece (30) are fixed and kept together, at the respective abutting edges (28, 38) by at least one of the following technologies for joining plastic materials: gluing, welding, hot plastic riveting and mechanical joining.

11. Duct according to the preceding claim, **characterized in that** mechanical engagement means are configured to be activated when the joint movement between the second piece (30) and the first piece (20) reaches corresponding end-of-stroke positions, in particular when the first abutting edge (28) of the first piece (20) contacts the second abutting edge (38) of the second piece (30).

12. Duct according to one or more of the preceding claims, wherein said at least one dividing plate (70) has a development along the longitudinal development direction X of the first tubular portion (21) of the first piece (20) such that, when the first abutting edge (28) of the first piece (20) comes into contact with the second abutting edge (38) of the second piece (30), said at least one dividing plate (70) substantially affects most or all longitudinal development along the X direction of the measuring channel (40).

13. Duct according to one or more of the preceding claims, wherein **characterized in that** the first piece (20) and/or the second piece (30) comprises an inclined internal surface (47) in which a reflection zone (46') is defined of the ultrasonic signals (17) emitted by the sensors (19', 19"), to thus vary and optimize the angle of reflection of the aforementioned ultrasonic signals towards the corresponding receiving sensor (19", 19').

14. Duct according to one or more of the preceding claims, wherein said at least one reflection zone (46', 46", 46"') for the ultrasonic signals (17) is made of different material and/or with a different surface finish compared to the remaining part of the second piece (30) and/or the first piece (20).

15. Duct according to one or more of the preceding claims, wherein:
- it comprises at least one dividing plate (70) protruding from said second tubular portion (31) for the flow of fluid which is intended to cross said measuring channel (40),
- said at least one dividing plate (70) protruding from said second tubular portion (31) is formed in a single body/piece with said second tubular portion (31),
- said first piece (20) and said second piece (30) are configured in such a way that, when the first abutting edge (28) of the first tubular portion (21) of the first piece (20) comes into contact with the second abutting edge (38) of the second tubular portion (31) of the second piece (30) to thus define said measuring channel (40), said at least one dividing plate (70) protruding from the second tubular portion (31) of the second piece (30) is fully inserted and housed inside said first tubular portion (21) of the first piece (20).

## Patentansprüche

1. Kanal (1) zum Durchleiten eines zu erkennenden und/oder zu messenden Fluids, vorzugsweise eines Gases, wobei der Kanal (1) zur Verwendung in einer Ultraschall-Vorrichtung zur Messung des Fluids geeignet ist, umfassend:
- ein erstes Teil (20) und ein zweites Teil (30), die vollständig oder größtenteils durch Formgebung aus polymerem Material hergestellt sind und die nach ihrer Formgebung konfiguriert sind, um miteinander beitreten zu können und nach ihrer Verbindung einen Messkanal (40) zu bilden, der dazu bestimmt ist, von dem zu messenden Fluid durchströmt zu werden,
wobei das erste Teil (20) Folgendes umfasst:
- einen ersten Anschluss (27') für den Einlass bzw. den Auslass des zu messenden Fluids in den bzw. aus dem Kanal (1),
- eine erste Öffnung (25), die in dem ersten Teil (20) erhalten wird, für das Durchleiten von Ultraschallsignalen (17), die von mindestens einem ersten Ultraschallsensor (19') abgegeben und/oder empfangen werden, der an dem ersten Teil (20) montiert ist,
- einen ersten rohrförmigen Abschnitt (21), der mit einer ersten Anschlagkante (28) bereitgestellt ist,
wobei das zweite Teil (30) Folgendes umfasst:
- einen zweiten Anschluss (27") für den Auslass bzw. den Einlass des Fluids aus bzw. in den Kanal (1),
- eine zweite Öffnung (35), die im zweiten Teil (30) erhalten wird, für das Durchleiten von Ultraschallsignalen (17), die von mindestens einem zweiten Ultraschallsensor (19") emittiert und/oder empfangen werden, der an dem zweiten Teil (30) montiert ist,
- einen zweiten rohrförmigen Abschnitt (31), der mit einer zweiten Anschlagkante (38) bereitgestellt ist,
wobei das erste Teil (20) und das zweite Teil (30) derart konfiguriert sind, dass die erste Anlegekante (28) des ersten rohrförmigen Abschnitts (21) des ersten Teils (20) mit der zweiten Anlegekante (38) des zweiten rohrförmigen Abschnitts (31) des zweiten Teils (30) in Berührung kommt, wodurch der Messkanal (40) gebildet wird, wobei der Kanal (1) **dadurch gekennzeichnet ist, dass**:
- er mindestens eine Trennplatte (70) umfasst, die aus dem ersten rohrförmigen Abschnitt (21) herausragt und für das Durchströmen von Fluid vorgesehen ist, das den Messkanal (40) durchströmen soll,
- das erste Teil (20) und das zweite Teil (30) derart konfiguriert sind, dass, wenn die erste Anlegekante (28) des ersten rohrförmigen Abschnitts (21) des ersten Teils (20) mit der zweiten Anlegekante (38) des zweiten rohrförmigen Abschnitts (31) des zweiten Teils (30) in Berührung kommt, um auf diese Weise den Messkanal zu definieren (40) bildet, die mindestens eine Trennplatte (70), die aus dem ersten rohrförmigen Abschnitt (21) des ersten Teils (20) herausragt, vollständig in den zweiten rohrförmigen Abschnitt (31) des zweiten Teils (30) eingefügt und darin in einem Gehäuse aufgenommen ist.

2. Kanal nach Anspruch 1, wobei die mindestens eine Trennplatte (70) einstückig mit dem ersten rohrförmigen Abschnitt (21) gebildet ist.

3. Kanal nach einem oder mehreren der vorstehenden Ansprüche, wobei der erste rohrförmige Abschnitt (21) des ersten Teils (20) einen im Wesentlichen rechteckigen Querschnitt aufweist und wobei der zweite rohrförmige Abschnitt (31) des zweiten Teils (30) einen im Wesentlichen rechteckigen Querschnitt aufweist.

4. Kanal nach einem oder mehreren der vorstehenden Ansprüche, wobei:
- das erste Teil (20), entsprechend der ersten Öffnung (25), einen ersten Montageabschnitt (24) für einen ersten Sensor (19') umfasst, wobei der erste Montageabschnitt (24) im Hinblick auf die Längsrichtung X des ersten rohrförmigen Abschnitts (21) des ersten Teils (20) abgewinkelt ist,
- das zweite Teil (30), entsprechend der zweiten Öffnung (35), einen zweiten Montageabschnitt (34) für einen zweiten Sensor (19") umfasst, wobei der zweite Montageabschnitt (34) im Hinblick auf die Längsrichtung X des zweiten rohrförmigen Abschnitts (31) des zweiten Teils (30) abgewinkelt ist.

5. Kanal nach dem vorstehenden Anspruch, wobei die Längsentwicklungsachse A des ersten Montageabschnitts (24) im Hinblick auf die Längsentwicklungsrichtung X des ersten rohrförmigen Abschnitts (21) so abgewinkelt ist, dass das vom ersten Ultraschallsensor (19') emittierte Ultraschallsignal (17) einen Reflexionspfad in Form eines "V", symmetrisch oder asymmetrisch, oder in Form eines "W" verläuft, um anschließend von dem am zweiten Teil (30) montierten zweiten Sensor (19") empfangen zu werden, oder umgekehrt.

6. Kanal nach den Ansprüchen 4 oder 5, wobei:
- die Längsentwicklungsachse A des ersten Montageabschnitts (24) im Hinblick auf die Längsentwicklungsrichtung X des ersten rohrförmigen Abschnitts (21) um einen Winkel α abgewinkelt ist,
- die Längsentwicklungsachse A' des zweiten Montageabschnitts (34) im Hinblick auf die Längsentwicklungsrichtung X des zweiten rohrförmigen Abschnitts (31) um einen Winkel α' abgewinkelt ist,
und bei denen die Winkel α und α' im Wesentlichen gleich oder voneinander unterschiedlich sind.

7. Kanal nach einem oder mehreren der vorstehenden Ansprüche, wobei der zweite rohrförmige Abschnitt (31) Folgendes umfasst:
- eine zweite obere Wand (32'), an der die zweite Öffnung (35) ausgebildet ist,
- eine zweite Bodenwand (32"), die der zweiten oberen Wand (32') gegenüberliegt,
und wobei in der zweiten Bodenwand (32") mindestens eine Reflexionszone (46') ausgebildet ist.

8. Kanal gemäß dem vorstehenden Anspruch, wobei die zweite Bodenwand (32") im Hinblick auf die Längsausdehnungsrichtung X des zweiten rohrförmigen Abschnitts (31) des zweiten Teils (30) geneigt ist und/oder zumindest teilweise aus einem anderen Material und/oder mit einer anderen Oberflächenbeschaffenheit als der verbleibende Teil des zweiten Teils (30) hergestellt ist.

9. Kanal nach einem oder mehreren der vorstehenden Ansprüche, wobei der erste rohrförmige Abschnitt (21) Folgendes umfasst:
- eine erste obere Wand (22'), an der die erste Öffnung (25) ausgebildet ist,
- eine erste Bodenwand (22"), die der ersten oberen Wand (22') gegenüberliegt,
und dass in der ersten oberen Wand (22') und/oder in der ersten Bodenwand (22,,) mindestens eine Reflexionszone (46", 46"') gebildet ist.

10. Kanal nach einem oder mehreren der vorstehenden Ansprüche, wobei das erste Teil (20) und das zweite Teil (30) mechanische Eingriffsmittel umfassen, vorzugsweise mechanische Eingriffsmittel zum Aufhänger, zum Einpressen, um zu ineinandergreifen, um zum Einrasten und/oder zum Einrasten zu konfigurieren, so dass sie das erste Teil (20) und das zweite Teil (30) miteinander verbunden halten, und/oder das erste Teil (20) und/oder das zweite Teil (30) an den jeweiligen Stoßkanten (28, 38) durch mindestens eine der folgenden Verbindungstechniken für Kunststoffmaterialien fixiert und zusammengehalten werden: Kleben, Schweißen, Heißkunststoffnieten und mechanisches Verbinden.

11. Kanal nach dem vorstehenden Anspruch, **dadurch gekennzeichnet, dass** mechanische Eingriffsmittel so konfiguriert sind, dass sie aktiviert werden, wenn die Verbindungsbewegung zwischen dem zweiten Teil (30) und dem ersten Teil (20) entsprechende Hubendpositionen erreicht, insbesondere wenn die erste Anschlagkante (28) des ersten Teils (20) die zweite Anschlagkante (38) des zweiten Teils (30) in Berührung bringt.

12. Kanal nach einem oder mehreren der vorstehenden Ansprüche, wobei die mindestens eine Trennplatte (70) eine Ausdehnung entlang der Längsrichtung X des ersten rohrförmigen Abschnitts (21) des ersten Teils (20) aufweist, derart, dass, wenn die erste Anschlagkante (28) des ersten Teils (20) mit der zweiten Anschlagkante (38) des zweiten Teils (30) in Kontakt kommt, die mindestens eine Trennplatte (70) im Wesentlichen den größten Teil oder die gesamte Längsausdehnung des Messkanals (40) entlang der X-Richtung beeinflusst.

13. Kanal nach einem oder mehreren der vorstehenden Ansprüche, wobei das erste Teil (20) und/oder das zweite Teil (30) eine geneigte Innenfläche (47) umfasst, in der eine Reflexionszone (46') für die von den Ultraschallsensoren (19', 19") abgegebenen Ultraschallsignale (17) definiert ist, um auf diese Weise den Reflexionswinkel der vorgenannten Ultraschallsignale in Richtung des entsprechenden Empfangssensors (19", 19') zu variieren und zu optimieren.

14. Kanal nach einem oder mehreren der vorstehenden Ansprüche, wobei die mindestens eine Reflexionszone (46', 46,,, 46"') für die Ultraschallsignale (17) aus einem anderen Material und/oder mit einer anderen Oberflächenbeschaffenheit als der verbleibende Teil des zweiten Teils (30) und/oder des ersten Teils (20) ausgebildet ist.

15. Kanal nach einem oder mehreren der vorstehenden Ansprüche, wobei:
- er mindestens eine Trennplatte (70) umfasst, die aus dem zweiten rohrförmigen Abschnitt (31) herausragt und für das Durchströmen von Fluid vorgesehen ist, das den Messkanal (40) durchströmen soll,
- wobei mindestens eine aus dem zweiten rohrförmigen Abschnitt (31) herausragende Trennplatte (70) einstückig mit dem zweiten rohrförmigen Abschnitt (31) gebildet ist,
- das erste Teil (20) und das zweite Teil (30) derart konfiguriert sind, dass, wenn die erste Anlegekante (28) des ersten rohrförmigen Abschnitts (21) des ersten Teils (20) mit der zweiten Anlegekante (38) des zweiten rohrförmigen Abschnitts (31) des zweiten Teils (30) in Berührung kommt, um auf diese Weise den Messkanal zu bilden (40) bildet, die mindestens eine Trennplatte (70), die aus dem zweiten rohrförmigen Abschnitt (31) des zweiten Teils (30) herausragt, vollständig in den ersten rohrförmigen Abschnitt (21) des ersten Teils (20) eingefügt und darin aufgenommen ist.

## Revendications

1. Conduit (1), destiné au passage d'un fluide à détecter et/ou à mesurer, de préférence un gaz, ledit conduit (1) étant adapté pour être utilisé pour/dans un dispositif à ultrasons destiné à mesurer le fluide, comprenant :
- une première pièce (20) et une seconde pièce (30), qui sont entièrement ou en grande partie constituées d'un matériau polymère par moulage, et qui, une fois moulées, sont configurées pour être jointes et fixées l'une à l'autre afin de définir, à la suite de leur assemblage, un canal de mesure (40), destiné à être traversé par le fluide à mesurer,
ladite première pièce (20) comprenant :
- un premier orifice (27') destiné à l'entrée ou à la sortie du fluide à mesurer dans ledit/à partir dudit conduit (1),
- une première ouverture (25), obtenue dans ladite première pièce (20), destinée au passage de signaux ultrasonores (17) émis et/ou reçus par au moins un premier capteur ultrasonore (19') destiné à être monté sur ladite première pièce (20),
- une première partie tubulaire (21) étant pourvue d'un premier bord de butée (28),
ladite seconde pièce (30) comprenant :
- un second orifice (27") destiné à la sortie du fluide dudit conduit (1) ou à l'entrée du fluide dans ledit conduit,
- une seconde ouverture (35), obtenue dans ladite seconde pièce (30), destinée au passage de signaux ultrasonores (17) émis et/ou reçus par au moins un second capteur ultrasonore (19") destiné à être monté sur ladite seconde pièce (30),
- une seconde partie tubulaire (31) étant pourvue d'un second bord de butée (38),
ladite première pièce (20) et ladite seconde pièce (30) étant configurées de telle sorte que ledit premier bord de butée (28) de la première partie tubulaire (21) de la première pièce (20) vienne en contact avec le second bord de butée (38) de la seconde partie tubulaire (31) de la seconde pièce (30), afin de définir ainsi ledit canal de mesure (40), ledit conduit (1) étant **caractérisé en ce que** :
- il comprend au moins une plaque de séparation (70) faisant saillie de ladite première partie tubulaire (21) pour l'écoulement du fluide étant destiné à traverser ledit canal de mesure (40),
- ladite première pièce (20) et ladite seconde pièce (30) sont configurées de telle sorte que, lorsque le premier bord de butée (28) de la première partie tubulaire (21) de la première pièce (20) entre en contact avec le second bord de butée (38) de la seconde partie tubulaire (31) de la seconde pièce (30) pour définir ainsi ledit canal de mesure (40), ladite au moins une plaque de séparation (70) faisant saillie de la première partie tubulaire (21) de la première pièce (20) soit entièrement insérée et logée à l'intérieur de ladite seconde partie tubulaire (31) de la seconde pièce (30).

2. Conduit selon la revendication 1, ladite au moins une plaque de séparation (70) étant formée en un seul corps/en une seule pièce avec ladite première partie tubulaire (21).

3. Conduit selon l'une ou plusieurs des revendications précédentes, **caractérisé en ce que** ladite première partie tubulaire (21) de la première pièce (20) présente une section transversale sensiblement rectangulaire et **en ce que** ladite seconde partie tubulaire (31) de la seconde pièce (30) présente une section transversale sensiblement rectangulaire.

4. Conduit selon l'une ou plusieurs des revendications précédentes, dans lequel:
- ladite première pièce (20) comprend, en correspondance avec la première ouverture (25), une première partie de montage (24) destinée à un premier capteur (19'), ladite première partie de montage (24) formant un angle par rapport à la direction de développement longitudinale X de la première partie tubulaire (21) de la première pièce (20),
- ladite seconde pièce (30) comprend, en correspondance avec la seconde ouverture (35), une seconde partie de montage (34) destinée à un second capteur (19"), ladite seconde partie de montage (34) formant un angle par rapport à la direction de développement longitudinale X de la seconde partie tubulaire (31) de la seconde pièce (30).

5. Conduit selon la revendication précédente, l'axe de développement longitudinal A de la première partie de montage (24) forme un angle par rapport à la direction de développement longitudinale X de la première partie tubulaire (21), de sorte que le signal ultrasonore (17) émis par le premier capteur (19') définisse un trajet de réflexion en « V », symétrique ou asymétrique, ou en « W », pour être ensuite reçu par le second capteur (19") monté sur la seconde pièce (30), ou vice versa.

6. Conduit selon les revendications 4 ou 5, dans lequel :
- l'axe de développement longitudinal A de la première partie de montage (24) forme un angle α par rapport à la direction de développement longitudinale X de la première partie tubulaire (21),
- l'axe de développement longitudinal A' de la seconde partie de montage (34) forme un angle α' par rapport à la direction de développement longitudinale X de la seconde partie tubulaire (31),
et dans lequel les angles α et α' sont sensiblement égaux ou différents l'un de l'autre.

7. Conduit selon l'une ou plusieurs des revendications précédentes, ladite seconde partie tubulaire (31) comprenant :
- une seconde paroi supérieure (32') sur laquelle est formée ladite seconde ouverture (35),
- une seconde paroi inférieure (32") qui fait face à ladite seconde paroi supérieure (32'),
et au moins une zone de réflexion (46') étant formée dans ladite seconde paroi inférieure (32").

8. Conduit selon la revendication précédente, ladite seconde paroi de fond (32") étant inclinée par rapport à la direction de développement longitudinale X de la seconde partie tubulaire (31) de la seconde pièce (30) et/ou est réalisée, au moins en partie, d'un matériau différent et/ou avec une finition de surface différente de celle du reste de la seconde pièce (30).

9. Conduit selon l'une ou plusieurs des revendications précédentes, ladite première partie tubulaire (21) comprenant :
- une première paroi supérieure (22') sur laquelle est formée ladite première ouverture (25),
- une première paroi inférieure (22") qui fait face à ladite première paroi supérieure (22'),
et en ce qu'au moins une zone de réflexion (46", 46"') est formée dans ladite première paroi supérieure (22') et/ou dans ladite première paroi inférieure (22").

10. Conduit selon l'une ou plusieurs des revendications précédentes, ladite première pièce (20) et ladite seconde pièce (30) comprenant des moyens mécaniques de mise en prise, de préférence des moyens mécaniques de mise en prise d'accrochage, d'emmanchement à force, de verrouillage, d'encliquetage et/ou d'encliquetage, configurés pour maintenir ladite première pièce (20) et ladite seconde pièce (30) reliées l'une à l'autre, et/ou ladite première pièce (20) et/ou ladite seconde pièce (30) sont fixées et maintenues ensemble, au niveau des bords de butée respectifs (28, 38), par au moins l'une des technologies suivantes d'assemblage des matières plastiques : collage, soudage, rivetage à chaud de matière plastique et assemblage mécanique.

11. Conduit selon la revendication précédente, **caractérisé en ce que** des moyens mécaniques de mise en prise sont configurés pour être activés lorsque le mouvement d'articulation entre la seconde pièce (30) et la première pièce (20) atteint des positions de fin de course correspondantes, en particulier lorsque le premier bord de butée (28) de la première pièce (20) entre en contact avec le second bord de butée (38) de la seconde pièce (30).

12. Conduit selon l'une ou plusieurs des revendications précédentes, ladite au moins une plaque de séparation (70) présentant un développement le long de la direction de développement longitudinale X de la première partie tubulaire (21) de la première pièce (20) de telle sorte que, lorsque le premier bord de butée (28) de la première pièce (20) entre en contact avec le second bord de butée (38) de la seconde pièce (30), ladite au moins une plaque de séparation (70) influe sensiblement sur la majeure partie ou la totalité du développement longitudinal le long de la direction X du canal de mesure (40).

13. Conduit selon l'une ou plusieurs des revendications précédentes, **caractérisé en ce que** la première pièce (20) et/ou la seconde pièce (30) comporte une surface interne inclinée (47) dans laquelle est définie une zone de réflexion (46') des signaux ultrasonores (17) émis par les capteurs (19', 19"), afin de faire varier et d'optimiser ainsi l'angle de réflexion des signaux ultrasonores susmentionnés vers le capteur de réception (19", 19') correspondant.

14. Conduit selon l'une ou plusieurs des revendications précédentes, ladite au moins une zone de réflexion (46', 46", 46"') pour les signaux ultrasonores (17) étant réalisée dans un matériau différent et/ou présentant une finition de surface différente par rapport à la partie restante de la seconde pièce (30) et/ou de la première pièce (20).

15. Conduit selon l'une ou plusieurs des revendications précédentes, dans lequel:
- il comprend au moins une plaque de séparation (70) faisant saillie de ladite seconde partie tubulaire (31) pour l'écoulement du fluide destiné à traverser ledit canal de mesure (40),
- ladite au moins une plaque de séparation (70) faisant saillie à partir de ladite seconde partie tubulaire (31) est formée en un seul corps/en une seule pièce avec ladite seconde partie tubulaire (31),
- ladite première pièce (20) et ladite seconde pièce (30) sont configurées de telle sorte que, lorsque le premier bord de butée (28) de la première partie tubulaire (21) de la première pièce (20) entre en contact avec le second bord de butée (38) de la seconde partie tubulaire (31) de la seconde pièce (30) pour définir ainsi ledit canal de mesure (40), ladite au moins une plaque de séparation (70) faisant saillie de la seconde partie tubulaire (31) de la seconde pièce (30) soit entièrement insérée et logée à l'intérieur de ladite première partie tubulaire (21) de la première pièce (20).
